# EUROPÄISCHE PATENTSCHRIFT

(11) **EP 2 807 447 B1**
(45) Veröffentlichungstag und Bekanntmachung des Hinweises auf die Patenterteilung: **08.11.2017**
(21) Anmeldenummer: 12708739.3
(22) Anmeldetag: 26.01.2012
(51) Int. Cl.: G01B 5/00, G01B 21/04, F16C 32/06, B23Q 1/38

(54) **VERFAHREN ZUM ERMITTELN EINES KORREKTURWERTS FÜR EINE ÜBERWACHUNG EINES FLUIDLAGERS UND MASCHINE MIT MINDESTENS EINEM FLUIDLAGER**
METHOD FOR DETERMINING A CORRECTION VALUE FOR THE MONITORING OF A FLUID BEARING AND MACHINE HAVING AT LEAST ONE FLUID BEARING
PROCÉDÉ DE DÉTERMINATION D'UNE VALEUR DE CORRECTION POUR UN CONTRÔLE D'UN PALIER À FLUIDE, ET MACHINE PRÉSENTANT AU MOINS UN PALIER À FLUIDE

(43) Veröffentlichungstag der Anmeldung: 03.12.2014
(73) Patentinhaber: Carl Zeiss Industrielle Messtechnik GmbH, 73447 Oberkochen (DE)
(72) Erfinder: SAGEMUELLER, Rainer, 73434 Fachsenfeld Aalen (DE); GRUPP, Guenter, 89558 Boehmenkirch (DE)
(74) Vertreter: Witte, Weller & Partner Patentanwälte mbB
(86) Internationale Anmeldenummer: PCT/EP2012/051269
(87) Internationale Veröffentlichungsnummer: WO 2013/110338

(56) Entgegenhaltungen:
- WO-A1-2010/054767
- DE-U1- 20 118 421
- US-A- 4 630 942

## Beschreibung

Die vorliegende Erfindung betrifft Verfahren zum Ermitteln eines Korrekturwerts für eine Überwachung eines Fluidlagers einer Maschine zum Bearbeiten oder Vermessen eines Werkstücks, insbesondere eines Koordinatenmessgeräts, mit dem Schritt des Bereitstellens der Maschine zum Bearbeiten oder Vermessen eines Werkstücks, mit einem ersten Element und einem zweiten Element, wobei das erste Element und das zweite Element mittels mindestens eines Fluidlagers aneinander abgestützt sind bzw. abstützbar sind, und mit einer Steuerungseinrichtung zum Steuern der Maschine.

Des Weiteren betrifft die vorliegende Erfindung eine Maschine zum Bearbeiten und/oder Vermessen eines Werkstücks, insbesondere Koordinatenmessgerät, mit einem ersten Element und einem zweiten Element, wobei das erste Element und das zweite Element mittels mindestens eines Fluidlagers aneinander abgestützt sind bzw. abstützbar sind, mit einer Druckermittlungseinrichtung zum Ermitteln einer einen Druck in dem mindestens einen Fluidlager repräsentierenden Größe, und mit einer Steuerungseinrichtung zum Steuern der Maschine.

Verfahren zum Überwachen von Fluidlagern und Maschinen, insbesondere Koordinatenmessgeräte, mit überwachten Fluidlagern sind beispielsweise aus der Druckschrift WO 2010/054767 A1 bekannt.

Koordinatenmessgeräte sind im Stand der Technik weit verbreitet. Ein Koordinatenmessgerät ist eine Maschine mit einem Messkopf, der relativ zu einem Messobjekt in einem Messvolumen verfahren werden kann. Der Messkopf wird in eine definierte Position relativ zu einem Messpunkt an dem Messobjekt gebracht. Bei taktilen Koordinatenmessgeräten wird der Messpunkt beispielsweise mit einem am Messkopf angeordneten Taststift angetastet. Anschließend lassen sich Raumkoordinaten des Messpunktes anhand der bekannten Stellung des Messkopfes im Messvolumen bestimmen. Wenn man an einem Messobjekt die Raumkoordinaten von mehreren definierten Messpunkten bestimmt, lassen sich außerdem geometrische Abmessungen oder sogar die Raumform des Messobjektes bestimmen. Sie dienen dazu, beispielsweise im Rahmen einer Qualitätssicherung Werkstücke zu überprüfen oder die Geometrie eines Werkstücks vollständig im Rahmen eines sogenannten "Reverse Engineering" zu ermitteln. Darüber hinaus sind vielfältige weitere Anwendungsmöglichkeiten denkbar.

In derartigen Koordinatenmessgeräten können verschiedene Arten von Sensoren zur Anwendung kommen, um die Koordinaten eines zu vermessenden Werkstücks zu erfassen. Beispielsweise sind hierzu taktil messende Sensoren bekannt, wie sie beispielsweise von der Anmelderin unter der Produktbezeichnung "VAST", "VAST XT" oder "VAST XXT" vertrieben werden. Hierbei wird die Oberfläche des zu vermessenden Werkstücks mit einem Taststift angetastet, dessen Koordinaten im Messraum ständig bekannt sind. Ein derartiger Taststift kann auch entlang der Oberfläche eines Werkstücks bewegt werden, so dass in einem solchen Messvorgang im Rahmen eines sogenannten "Scanning-Verfahrens" eine Vielzahl von Messpunkten in festgelegten zeitlichen Abständen erfasst werden kann.

Darüber hinaus ist es bekannt, optische Sensoren einzusetzen, die ein berührungsloses Erfassen der Koordinaten eines Werkstücks ermöglichen. Ein Beispiel für einen derartigen optischen Sensor ist der unter der Produktbezeichnung "ViScan" von der Anmelderin vertriebene optische Sensor.

Die Sensoren können dann in verschiedenen Arten von Messaufbauten verwendet werden. Ein Beispiel für einen solchen Messaufbau ist das Produkt "O-INSPECT" der Anmelderin. Bei einem derartigen Gerät finden sowohl ein optischer Sensor als auch ein taktiler Sensor Anwendung, um verschiedene Prüfaufgaben an einer Maschine und idealerweise mit einer einzigen Aufspannung eines zu vermessenden Werkstücks durchzuführen. Auf diese Weise lassen sich auf einfache Weise viele Prüfaufgaben beispielsweise in der Medizintechnik, der Kunststofftechnik, der Elektronik und der Feinmechanik durchführen. Selbstverständlich sind darüber hinaus auch verschiedene andere Aufbauten denkbar.

Klassischerweise ist der Sensorkopf mit einem Trägersystem bzw. Maschinengestell verbunden, welches das Sensorsystem stützt und bewegt. Im Stand der Technik sind verschiedene Trägersysteme bekannt, beispielsweise Portalsysteme, Ständer-, Horizontalarm- und Armsysteme, alle Arten von Robotersystemen und letztlich geschlossene CT-Systeme bei mit Röntgenstrahlen arbeitenden Sensorsystemen. Die Trägersysteme können dabei des Weiteren Systemkomponenten aufweisen, die ein möglichst flexibles Positionieren des Sensorkopfs ermöglichen. Ein Beispiel hierfür ist das unter der Bezeichnung "RDS" vertriebene Dreh-Schwenk-Gelenk der Anmelderin. Darüber hinaus können verschiedene Adapter vorgesehen sein, um die unterschiedlichen Systemkomponenten des Trägersystems untereinander und mit dem Sensorsystem zu verbinden.

Wenngleich die vorliegende Erfindung bevorzugt bei Koordinatenmessgeräten zum Einsatz kommt, kann sie auch bei Werkzeugmaschinen und anderen Maschinen verwendet werden, bei denen ein Maschinenkopf mit hoher Genauigkeit relativ zu einem Werkstück oder dergleichen bewegt werden soll.

Sowohl Werkzeugmaschinen als auch Koordinatenmessgeräte besitzen einen verfahrbaren Arbeitskopf. Bei einem Koordinatenmessgerät, das nachfolgend exemplarisch zugrunde gelegt wird, ist der Kopf häufig am unteren freien Ende einer vertikal angeordneten Pinole befestigt. Die Pinole ist verfahrbar, so dass der Messkopf senkrecht zu einem Messtisch verfahren werden kann. Der Messtisch dient zur Aufnahme eines Messobjekts. Die Pinole ist ihrerseits an einem Querträger eines Portals angeordnet, und sie kann an dem Querträger in einer ersten Horizontalrichtung mittels eines Schlittens verfahren werden. Das Portal kann zusammen mit der Pinole in einer zweiten Horizontalrichtung verfahren werden, so dass der Messkopf insgesamt in drei zueinander senkrechten Raumrichtungen verfahren werden kann. Dabei bilden die Pinole, der Schlitten und das Portal ein Maschinengestell. Die maximalen Verfahrwege des Messkopfes entlang der drei Bewegungsrichtungen bestimmen ein Messvolumen, innerhalb dessen Raumkoordinaten an einem Messobjekt bestimmt werden können.

In ähnlicher Weise können Werkzeugmaschinen aufgebaut sein. Diese besitzen als Arbeitskopf typischerweise eine Spindel mit einem Werkzeugträger, der zur Bearbeitung eines Werkstücks verfahren wird. Neben Luftlagern sind auch sogenannte Hydrolager bekannt, die als Fluid eine Flüssigkeit anstatt von Luft verwenden. Mittels der Flüssigkeit wird dann ein Schmierfilm gebildet, auf dem zwei Elemente sich relativ zueinander gleitend bewegen können. Unter dem Begriff "Fluidlager" werden im Rahmen der vorliegenden Anmeldung sowohl Luftlager, also aerostatische oder aerodynamische Lager, als auch Hydrolager, also hydrostatische oder hydrodynamische Lager, verstanden.

Selbstverständlich kann nicht nur das sensorkopfseitige Maschinengestell einer Maschine mit derartigen Lagern versehen sein. Auch eine Werkstückaufnahme einer Maschine kann etwa Luftlager aufweisen, beispielsweise wenn das Werkstück auf einem Drehtisch als Werkstückaufnahme angeordnet ist. Eine solcher Drehtisch wird bespielweise in dem Messgerät "PRISMO® Ultra mit RT-AB" der Anmelderin genutzt.

Des Weiteren offenbart die Druckschrift DE 36 37 410 A1 ein Verfahren zum Bestimmen von Abweichungen eines Drehtisches von einer idealen Drehachse an einem Koordinatenmessgerät. Nach diesem Verfahren wird ein spezieller Prüfkörper mit einer Vielzahl von definierten Messpunkten auf den Drehtisch aufgelegt, und die Positionen der definierten Messpunkte werden anschließend mit Hilfe des Koordinatenmessgerätes in verschiedenen Winkelstellungen ermittelt. Aus den Sätzen von Messpunktkoordinaten werden dann rechnerisch die Laufabweichungen der Drehachse und die Winkelpositionsabweichung bestimmt. Auf diese Weise lassen sich axiale Abweichungen des Drehtisches, radiale Abweichungen und sogenannte Taumelabweichungen in der Bewegung des Drehtisches bestimmen.

Dir Druckschrift DE 34 19 546 A1 offenbart ein Verfahren zum Ermitteln der Schwerpunktlage eines Prüfkörpers, der sehr kompliziert aufgebaut sein kann und viele Einzelteile mit unterschiedlichen spezifischen Gewichten besitzen kann, so dass die Schwerpunktlage nicht ohne Weiteres zu errechnen ist. Nach diesem Verfahren wird der Prüfkörper, der beispielsweise ein Kraftfahrzeug sein kann, auf einer Aufnahmeplatte angeordnet, die an definierten Lagerstellen auf den Tisch eines Koordinatenmessgerätes aufgelegt ist. An den Auflagestellen der Platte befinden sich Kraftmessdosen. Aus der Lageverteilung der Auflagestellen und den jeweils zugehörigen Auflagekräften kann man die Schwerpunktlage des Prüfkörpers berechnen, wobei die zunächst undefinierte Relativlage des Prüfkörpers zu der Aufnahmeplatte mit dem Koordinatenmessgerät bestimmt wird.

Die Druckschrift EP 0 866 233 A2 zeigt eine Vorrichtung zur Funktionsüberwachung und Stillsetzung für Luftlager, die eine Druckmessung zwischen der Lagerfläche und einer Grundplatte verwendet. Ein Druckwächter oder Drucksensor ist mit einem galvanischen Schalter verbunden, der wiederum mit der Steuerung einer Maschine verbunden ist.

Bei überwachten Luftlagern wird der Luftdruck im Luftlager direkt im Lagerspalt oder im Volumen zwischen Druckregler und Austrittsöffnung gemessen. Ziel der Lagerüberwachung ist meist eine Überwachung des Luftlagerspalts, um eine Überlastung des Luftlagers zu erkennen. Der Luftlagerdruck und die Breite bzw. Höhe des Luftlagerspalts sind dabei voneinander abhängig. Des Weiteren lassen sich aus den Lagerdrücken zum Beispiel Rückschlüsse auf das von einem luftgelagerten Tisch bewegte Werkstück ziehen. Hierzu werden häufig Kombinationen mehrer einzeln überwachter Luftlager eingesetzt, um zum Beispiel den Schwerpunkt oder das aktuelle, durch das Werkstück verursachte Kippmoment zu berechnen. Dies ist zum Beispiel in der Druckschrift DE 100 06 876 C1 oder der eingangs genannten Druckschrift WO 2010/054767 A1 beschrieben.

Im Idealfall gleitet ein mit einer bestimmten Last beaufschlagtes Luftlager über eine perfekt ebene Gegenfläche. In diesem Fall würde der gemessene Luftlagerdruck einen konstanten Wert liefern, der diesem Belastungszustand entspricht. In der Realität weisen aber alle beteiligten Lagerkomponenten Fertigungstoleranzen auf. Luftgelagerte Drehtische werden mit unterschiedlich schweren Planscheiben ausgerüstet werden, die vom Anwender gewechselt werden können. Sollen dann nur Informationen über das Werkstück gewonnen werden, sind die durch das Planscheibengewicht verursachten Offsets der Druckmessung und die durch die Fertigungstoleranzen der Lagerflächen verursachten Schwankungen störend.

Im Falle eines den Druck in dem Luftlager relativ zu einem Umgebungsluftdruck messenden Sensors können zudem wetterabhängige Schwankungen des Umgebungsluftdrucks eine Störgröße bilden, die ggf. nur durch zusätzliche Drucksensoreinrichtungen eliminiert werden kann. Hierdurch erhöht sich jedoch wiederum der Aufwand für den apparativen Aufbau.

Eine weitere Überwachungseinheit für ein Luftlager zeigt die Druckschrift DE 201 18 421 U1. Die Druckschrift US 4 630 942 A zeigt eine Führungsvorrichtung für ein hydrostatisches Lager.

Es ist daher eine Aufgabe der vorliegenden Erfindung, zumindest einen der voranstehend beschriebenen Nachteile zu beseitigen, insbesondere werkstückunabhängige Druckschwankungen zu eliminieren, und eine Verfahren, das eine verbesserte Überwachung eines Fluidlagers ermöglicht, und eine verbesserte Maschine mit einem solchen Fluidlager anzugeben.

Daher wird gemäß einem ersten Aspekt der Erfindung und gemäß Anspruch 1 vorgeschlagen, das eingangs genannte Verfahren zum Ermitteln eines Korrekturwerts für eine Überwachung eines Fluidlagers einer Maschine zum Bearbeiten oder Vermessen eines Werkstücks, insbesondere eines Koordinatenmessgeräts, mit den folgenden Schritten weiterzubilden:
- Ermitteln einer einen Druck in dem mindestens einen Fluidlager repräsentierenden Größe abhängig von einer Position und/oder Orientierung des ersten Elements relativ zu dem zweiten Element,
- Bestimmen eines Korrekturwerts für einen Druck in dem mindestens einen Fluidlager für die Position und/oder Orientierung des ersten Elements relativ zu dem zweiten Element, indem aus dem von der ermittelten Größe repräsentierten Druck der Korrekturwert orts- und/oder orientierungsabhängig bestimmt wird, und
- Hinterlegen des Korrekturwerts in der Steuerungseinrichtung.

Gemäß einem weiteren Aspekt der Erfindung wird eine Maschine gemäß Anspruch 11 vorgeschlagen.

Unter dem Begriff "Fluidlager" werden im Rahmen der vorliegenden Anmeldung sowohl Luftlager, also aerostatische oder aerodynamische Lager, als auch Hydrolager, also hydrostatische oder hydrodynamische Lager, verstanden. Insbesondere kann das Fluidlager ein Luftlager sein. Werden in einem Fluidlager zwei reale Flächen relativ zueinander bewegt, sind an einem Drucksensor unterschiedliche Drücke messbar, obwohl sich die Belastung des Fluidlagers während der Bewegung nicht geändert hat. Der gemessene Fluidlagerdruck hat also eine orts- und/oder orientierungsabhängige Komponente. Durch die vorgeschlagene Erfindung kann die orts- und/oder orientierungsabhängige Komponente jedoch mittels einer sogenannten "computer aided accuracy"(CAA)-Korrektur eliminiert werden.

Dazu werden in dem mindestens einen Fluidlager eine erste Lagerfläche des ersten Elements und eine zweite Lagerfläche des zweiten Elements relativ zueinander bewegt und die sich ergebenden Drücke aufgezeichnet. Aus den Drücken lässt sich dann die Druckschwankung bzw. ein Korrekturwert für einen gemessenen Druck orts- und/oder orientierungsabhängig bestimmen und in der Steuerungseinrichtung hinterlegen. Das Bestimmen kann dabei bereits in der Steuerungseinrichtung stattfinden oder aber in einer gesonderten Datenverarbeitungseinheit. Im anschließenden Messbetrieb werden die Korrekturwerte dann verwendet.

Auf diese Weise ist gewährleitstet, dass die dann während des Messbetriebs gemessenen Druckunterschiede nur durch das Werkstück und dessen Aufspannung verursacht sind.

Die vorgeschlagene CAA-Korrektur kann daher alle im System der Maschine vorhandenen Offsets, insbesondere elektrische Offsets der verwendeten Sensoren, ortsabhängige Schwankungen einer eventuell vorgesehenen magnetischen Vorspannkraft und pneumatische Offsets, eliminieren. Des Weiteren werden alle nicht durch das Werkstück, sondern durch Änderungen der Aufbauten, zum Beispiel eine andere Planscheibe eines Drehtischs, oder Änderungen eines Maschinengestells verursachte Druckschwankungen eliminiert.

Insbesondere kann der Schritt des Ermittelns zeitnah vor einer anschließenden Vermessung bzw. Bearbeitung des Werkstücks durchgeführt werden. Dann werden auf diese Weise auch durch wetterabhängige Schwankungen des Umgebungsluftdrucks bedingte Störungen eliminiert.

Dynamische Effekte in dem Fluidlager können unter Umständen vernachlässigbar sein. Auch Druckänderungen aufgrund dynamischer Effekte lassen sich jedoch korrigieren, indem ein Fluidlager für verschiedene Belastungen und Bewegungsgeschwindigkeiten kalibriert wird. Beispielsweise bei einem Drehtisch, der derart belastet ist, dass ein Kippmoment vorliegt, wandert die Lagerbelastung mit der Drehtischposition. Die Fortpflanzung einer Druckänderung in dem Fluidlager benötigt typischerweise mehrere Zehntelsekunden, jedoch abhängig von der Drehgeschwindigkeit. Es können somit unter Umständen sowohl belastungs- als auch drehgeschwindigkeitsabhängige Drücke in dem Fluidlager vorliegen. In diesem Fall müsste die Kalibrierung für verschiedene Lastfälle und in jedem Lastfall mit verschiedenen Bewegungsgeschwindigkeiten durchgeführt werden. Die Ergebnisse würden dann ebenfalls in der Steuerungseinrichtung hinterlegt.

Das erste Element und das zweite Element sind mittels eines zwischen die erste Lagerfläche des ersten Elements und die zweite Lagerfläche des zweiten Elements einbringbaren Fluids aneinander abstützbar. Das Fluidlager an sich ist somit durch die einander gegenüberliegenden erste Lagerfläche und zweite Lagerfläche bereitgestellt, zwischen die ein Fluid einbringbar ist. Bei dem Fluid handelt es sich insbesondere um Luft, es kann sich jedoch auch um ein anderes Gas handeln. Das Fluid wird unter einem gewissen Druck stehend zwischen die erste Lagerfläche und die zweite Lagerfläche eingefüllt bzw. eingedüst. Dadurch wird der Lagerspalt hervorgerufen bzw. erzeugt. Das Fluid kann dann durch den Lagerspalt strömen. Auf diese Weise wird das Fluidlager zwischen dem ersten Element und dem zweiten Element bereitgestellt. Im Betrieb der Maschine ist das Fluidlager somit durch den von dem Fluid bzw. der Luft durchströmten Lagerspalt zwischen der ersten Lagerfläche und der zweite Lagerfläche bereitgestellt. Das Fluidlager weist somit die erste Lagerfläche des ersten Elements und die zweite Lagerfläche des zweiten Elements sowie einen zwischen die erste Lagerfläche und die zweite Lagerfläche einbringbaren Fluid- bzw. Luftstrom bzw. einbringbares Fluid bzw. einbringbare Luft auf, die bzw. der die erste Lagerfläche und die zweite Lagerfläche aneinander abstützt. Unter dem Druck in einem Fluidlager kann somit insbesondere der statische Druck der Luft zwischen der ersten Lagerfläche und der zweiten Lagerfläche verstanden werden.

Die eingangs genannte Aufgabe wird somit vollständig gelöst.

In einer Ausführungsform der Erfindung kann vorgesehen sein, dass der Schritt des Ermittelns für eine Vielzahl von Positionen und/oder Orientierungen des ersten Elements relativ zu dem zweiten Element durchgeführt wird.

Insbesondere können die Schritte des Ermittelns und des Bestimmens, und insbesondere auch des Hinterlegens, für eine Vielzahl von Positionen und/oder Orientierungen des ersten Elements relativ zu dem zweiten Element werden.

Insbesondere kann dabei vorgesehen sein, dass die Vielzahl von Positionen und/oder Orientierungen den gesamten Bereich einer relativen Bewegung zwischen dem ersten Element und dem zweiten Element in diskreten Schritten abdeckt.

Folglich wird der gesamte Bewegungsbereich, den eine erste Lagerfläche des ersten Elements und eine zweite Lagerfläche des zweiten Elements relativ zueinander ausführen können, schrittweise bzw. stufenweise durchlaufen und für jeden Schritt bzw. jede Stufe ein Druck ermittelt und ein Korrekturwert bestimmt. Dabei können die Schritte bzw. Stufen beliebig fein gewählt werden. Es versteht sich, dass im Falle einer linearen Bewegung bestimmte Abstände zwischen einzelnen Schritten vorgegeben werden können, beispielsweise 5 mm, 1 cm oder 5 cm. Bei Drehbewegungen können beispielsweise Winkel vorgegeben werden, beispielsweise 0,5°, 1°, 2° usw. Insbesondere bei Drehtischen, die nach einer vollständigen Umdrehung wieder dieselbe relative Lage der ersten Lagerfläche und der zweiten Lagerfläche relativ zueinander erreichen, kann somit eine hohe Auflösung der Korrekturwerte im gesamten Bewegungsbereich gewählt und erhalten werden. Ein Bereich zwischen den einzelnen, in den diskreten Schritten bestimmten Korrekturwerten kann mittels einer Interpolation bestimmt werden. Etwa kann eine lineare Interpolation durchgeführt werden. Es kann beispielsweise auch ein Polynom-Ansatz gewählt werden, um eine Funktion für die Korrekturwerte über mehrere, in den diskreten Schritten bestimmte Korrekturwerte zu finden.

Grundsätzlich kann anstatt einer Bewegung in diskreten Schritten auch eine kontinuierliche Bewegung ausgeführt werden. Folglich werden dann die ersten Lagerfläche und die zweite Lagerfläche zumindest während des Schritts des Ermittelns kontinuierlich relativ zueinander bewegt. Es wird somit eine Art "Scanning-Vorgang" bei der Ermittlung bereitgestellt. Eventuell können dabei Ungenauigkeiten auftreten, da die pneumatische Angleichsvorgänge nicht genügend Zeit haben, um einen stabilen Zustand einzustellen. Hierzu kann vorgesehen sein, abhängig von einer Geschwindigkeit der kontinuierlichen Bewegung einen, beispielsweise empirisch ermittelten, Korrekturwert vorzusehen. Mit dem Korrekturwert können dann die während einer kontinuierlichen Bewegung ermittelt, einen Druck repräsentierenden Größen korrigiert werden. Diese entsprechen dann in ihrer Genauigkeit den mittels einer Bewegung in diskreten Schritten ermittelten Größen. Des Weiteren ist es möglich, aus mehreren in einem bestimmten Bereich ermittelten Messwerten bzw. Größen einen Mittelwert zu bilden.

Dabei kann vorgesehen sein, dass zunächst für jede Position und/oder Orientierung des ersten Elements relativ zu dem zweiten Element der Schritt des Ermittelns durchgeführt wird. Für den so ermittelten Datensatz kann dann einmalig ein Schritt des Bestimmens zur Bestimmung aller Korrekturwerte durchgeführt werden, die dann in einem Schritt des Hinterlegens hinterlegt werden. Es kann aber auch vorgesehen sein, dass zunächst für jede Position und/oder Orientierung des ersten Elements relativ zu dem zweiten Element die Schritte sowohl des Ermittelns als auch des Bestimmens durchgeführt werden. Es wird somit nach jedem Schritt des Ermittelns unmittelbar der entsprechende Korrekturwert bestimmt. Anschließend werden dann alle Korrekturwerte gemeinsam in dem Schritt des Hinterlegens hinterlegt. Letztlich kann auch vorgesehen sein, dass für jede Position und/oder Orientierung des ersten Elements relativ zu dem zweiten Element die Schritte des Ermittelns, des Bestimmens und des Hinterlegens durchgeführt werden. Dabei werden dann in jeder Position und/oder Orientierung des ersten Elements relativ zu dem zweiten Element alle Schritte durchgeführt und die Korrekturwerte sukzessive hinterlegt.

In einer Ausführungsform der Erfindung kann vorgesehen sein, dass das erste Element und das zweite Element jeweils ein Element einer Werkstückaufnahme zur Aufnahme eines Werkstücks ist. Insbesondere kann dabei vorgesehen sein, dass das erste Element ein Drehtisch oder ein Rotor eines Drehtischs und das zweite Element eine Basis, auf der der Drehtisch abgestützt ist, oder ein Stator eines Drehtischs ist.

Selbstverständlich kann es sich dabei auch bei dem ersten Element und dem zweiten Element um Elemente des Drehtischs handeln. Beispielsweise kann das erste Element ein Rotor des Drehtischs und das zweite Element ein Stator des Drehtischs sein. Die Basis kann dabei ebenfalls ein Element eines Maschinengestells bilden, an dem ein Arbeitskopf der Maschine angeordnet ist.

Auf diese Weise kann somit ein quasi werkstückseitig angeordnetes Fluidlager bzw. Luftlager, insbesondere eine Lagerung eines Drehtischs, mittels der vorgeschlagenen Erfindung verbessert überwacht werden.

In einer Ausführungsform der Erfindung kann vorgesehen sein, dass die Maschine mehrere Fluidlager aufweist, wobei die Schritte des Ermittelns, des Bestimmens und des Hinterlegens für jedes der Fluidlager durchgeführt werden.

Auf diese Weise kann auf eine Vielzahl von Fluidlagern eine verbesserte Überwachung bereitgestellt werden. Dies ermöglicht es, die durch eine Überwachung einer Vielzahl von Fluidlagern möglichen Vorteile zu nutzen. Beispielsweise kann so ein durch das Werkstück verursachtes Kippmoment besser überwacht oder aber eine Schwerpunktlage des auf der Werkstückaufnahme angeordneten Werkstücks ermittelt werden.

In einer weiteren Ausführungsform kann vorgesehen sein, dass das erste Element und das zweite Element jeweils ein Element eines Maschinengestells der Maschine ist, wobei an dem Maschinengestell ein Arbeitskopf der Maschine angeordnet ist.

Bei dem Arbeitskopf kann es sich, beispielsweise im Falle eines Koordinatenmessgeräts, um einen Sensorkopf handeln, der beispielsweise einen optischen Sensor und/oder einen taktilen Sensor zum Vermessen des Werkstücks aufweist. Des Weiteren kann es sich, beispielsweise im Falle einer Werkzeugmaschine, bei dem Arbeitskopf auch um einen Werkzeugkopf handeln, der ein Werkzeug, beispielsweise ein Dreh-, Fräs- oder Schneidwerkzeug, trägt.

Mittels der vorgeschlagenen Erfindung ist es somit auch möglich, die Fluidlagerung bzw. Luftlagerung eines einen Arbeitskopf tragenden Maschinengestells einer Maschine besser zu überwachen. Insbesondere eine Lagerbelastung und eine eventuelle Überlastung des Fluidlagers, bei dem die erste Lagerfläche und die zweite Lagerfläche miteinander in Kontakt kommen, kann somit präzise ermittelt werden. Dies ist insbesondere wichtig, um im Falle einer Überlastung des Fluidlagers möglichst umgehend einen Notstopp der Maschine einzuleiten und so Beschädigungen des Fluidlagers zu vermeiden.

In einer weiteren Ausführungsform der Erfindung kann vorgesehen sein, dass vor jedem Schritt des Ermittelns ein Schritt des Bewegens des ersten Elements und des zweiten Elements relativ zueinander derart ausgeführt wird, dass sich eine Position und/oder eine Orientierung des ersten Elements relativ zu dem zweiten Element ändert.

Auf diese Weise kann der relative Bewegungsbereich der ersten Lagerfläche des ersten Elements und der zweiten Lagerfläche des zweiten Elements, insbesondere sukzessive oder kontinuierlich, durchfahren werden. Die erste Lagerfläche und die zweite Lagerfläche werden somit zunächst um ein gewisses Maß relativ zueinander bewegt und verharren dann kurzzeitig in dieser Position. Die relative Position der ersten Lagerfläche relativ zu der zweiten Lagerfläche wird ermittelt und ebenso die einen Druck in dem Lager repräsentierende Größe. Dann werden die Schritte des Bestimmens und des Hinterlegens ausgeführt. Anschließend werden die erste Lagerfläche und die zweite Lagerfläche wiederum um ein gewisses Maß relativ zueinander bewegt, und die Schritte des Ermittelns, des Bestimmens und des Hinterlegens werden erneut ausgeführt.

Insbesondere können somit die Schritte des Ermittelns und des Bestimmens, und insbesondere des Hinterlegens, sowie insbesondere auch der Schritt des Bewegens, wiederholt durchgeführt werden, bis ein gesamter Bewegungsbereich des ersten Elements und des zweiten Elementsrelativ zueinander durchlaufen ist.

Somit kann vorgesehen sein, dass das Bewegen der ersten Lagerfläche relativ zu der zweiten Lagerfläche schrittweise erfolgt, wobei sich die Position und/oder die Orientierung des ersten Elements und des zweiten Elements während des Schritts des Ermittelns, insbesondere auch während des Schritts des Bestimmens und/oder des Schritts des Hinterlegens, relativ zueinander nicht ändert.

Des Weiteren kann vorgesehen sein, dass das Bewegen des ersten Elements relativ zu dem zweiten Element kontinuierlich erfolgt, wobei sich die Position und/oder die Orientierung des ersten Elements und des zweiten Elementswährend des Schritts des Ermittelns, insbesondere auch während des Schritts des Bestimmens und/oder des Schritts des Hinterlegens, relativ zueinander ändert.

In einer Ausführungsform der Erfindung kann vorgesehen sein, dass die Schritte des Ermittelns, des Bestimmens und des Hinterlegens durchgeführt werden, ohne dass das Werkstück auf der Werkstückaufnahme angeordnet ist.

Auf diese Weise kann gewährleistet werden, dass durch das Werkstück verursachte Druckunterschiede bei der Überwachung erfasst werden können. Dies ist insbesondere für weitere Auswertungen, wie zum Beispiel das wirkende Kippmoment oder die Schwerpunktlage des Werkstücks, vorteilhaft.

In einer weiteren Ausführungsform des Verfahrens kann vorgesehen sein, dass das Verfahren des Weiteren die folgenden Schritte aufweist:
- Anordnen des Werkstücks auf einer Werkstückaufnahme der Maschine und
- Bearbeiten oder Vermessen des Werkstücks unter Berücksichtigung des Korrekturwerts.

Auf diese Weise ist es möglich, die Bearbeitung oder Vermessung des Werkstücks mit einer verbesserten Fluidlagerüberwachung durchzuführen. Der Schritt des Anordnens des Werkstücks auf einer Werkstückaufnahme der Maschine kann dabei unmittelbar nach dem Schritt des Bereitstellens erfolgen, er kann aber auch erst unmittelbar nach dem Schritt des Hinterlegens erfolgen.

In einer Ausführungsform der Erfindung kann vorgesehen sein, dass der Schritt des Ermittelns ausgeführt wird, indem der Druck direkt mittels eines Drucksensors ermittelt wird.

Insbesondere kann dabei vorgesehen sein, dass der Druck direkt in dem Fluidlager, das heißt in dem Fluidlagerspalt, ermittelt wird. Es kann aber auch vorgesehen sein, dass der Druck in einer der zu dem Fluidlager hinführenden Luftzuführungsleitungen ermittelt wird.

Durch die direkte Ermittlung des Drucks kann der Druck in dem Fluidlager unmittelbar bestimmt werden, ohne Umrechnungen vornehmen zu müssen, bei denen eine Genauigkeit der Ermittlung des Drucks abnehmen kann.

Insbesondere kann der Schritt des Bearbeitens oder Vermessens des Werkstücks unter Berücksichtigung des Korrekturwerts im kurzen zeitlichen Abstand nach dem Schritt des Hinterlegens erfolgen.

Auf diese Weise wird der Vorteil bereitgestellt, auch wetterabhängige Luftdruckschwankungen kalibrieren zu können.

In einer weiteren Ausführungsform des Verfahrens kann vorgesehen sein, dass der Schritt des Ermittelns ausgeführt wird, indem der Druck mittelbar über eine mittels mindestens eines Dehnmessstreifens oder mindestens eine Kraftmessdose erfasste Verformung des ersten und/oder des zweiten Elements ermittelt wird, oder indem der Druck mittelbar über eine mittels eines Abstandssensors erfasste Fluidlagerspaltbreite zwischen dem ersten Element und dem zweiten Element ermittelt wird.

Durch die mittelbare Erfassung des Drucks können beispielsweise die Notwendigkeit, temperaturabhängige Korrekturen aufgrund eines relativ messenden Drucksensors vorzunehmen, vermieden werden. Die mittelbare Ermittlung des Drucks kann somit gegenüber der direkten Ermittlung robuster sein. Die Verwendung von Abstandssensoren anstelle von Drucksensoren kann des Weiteren sehr vorteilhaft sein, da die zu messenden Druckunterschiede, sehr gering ausfallen können. Abstandssensoren können sehr viel genauer und hochauflösender messen, so dass diese mittelbare Ermittlung eines Drucks bzw. Druckunterschieds genauer erfolgen kann.

In einer weiteren Ausführungsform des Verfahrens kann vorgesehen sein, dass der Schritt des Ermittelns ausgeführt wird, indem aus vorbestimmten Geometriedaten des ersten Elements und des zweiten Elements ein erwarteter Druck oder Druckunterschied bzw. eine erwartete Druckänderung in dem Fluidlager abhängig von einer Position und/oder Orientierung des ersten Elements relativ zu dem zweiten Element berechnet bzw. ermittelt wird.

Dieser Schritt des Ermittelns kann beispielsweise in einer Datenverarbeitungseinrichtung ausgeführt werden. Diese Datenverarbeitungseinrichtung kann in der Steuerungseinrichtung der Maschine vorgesehen sein.

Die notwendigen Geometriedaten des ersten Elements und des zweiten Elements können beispielsweise nach einer Qualitätskontrolle in der Fertigung vorliegen, bei der das erste Element und das zweite Element vermessen wurden. Die tatsächlichen Geometrien der Bauteile sind damit bekannt und damit ihre Abweichungen von ihrer idealen vorgegebenen geometrischen Soll-Form. Aus diesen dann bekannten Formfehlern können über dem Durchschnittsfachmann bekannte mathematische Modelle die zu erwartenden Druckschwankungen in den Fluidlagern errechnet werden. Somit kann der Schritt des Ermittelns lediglich in einer Datenverarbeitungseinrichtung ausgeführt werden. Somit könnte eine für die vorgeschlagene CAA-Offset-Kalibrierung notwendige Zeitdauer verringert werden.

Es kann auch vorgesehen sein, dass ein Zusammenhang zwischen den Geometriedaten und dem erwarteten Druck bzw. Druckunterschied vorab empirisch in einem Laborversuch ermittelt wird. Aus dem so gewonnen Zusammenhang können auch die Parameter eines mathematischen Korrekturmodells bestimmt werden. Die Ergebnisse eines solchen Laborversuchs oder das mathematische Korrekturmodell können dann in der Datenverarbeitungseinrichtung oder der Steuerungseinrichtung hinterlegt werden. Im Betrieb könnte dann basierend auf den Geometriedaten die im Rahmen des Laborversuchs ermittelten Drücke bzw. Druckunterschiede ausgelesen werden. Aus diesen kann dann der Korrekturwert bestimmt werden. Die Korrekturwerte könnten auch zum Beispiel mit Hilfe des mathematischen Modells ermittelt werden, dessen Parameter basierend auf den Geometriedaten und den zuvor durchgeführten Laborversuchen bestimmt wurden.

In allen Ausführungsformen des Verfahrens kann vorgesehen sein, dass das Fluidlager ein Luftlager ist.

Entsprechend kann in einer Ausführungsform der Maschine vorgesehen sein, dass das erste Element ein Drehtisch und das zweite Element eine Basis ist, auf der der Drehtisch abgestützt ist.

Auch hier kann somit ein werkstückseitig angeordnetes Fluidlager bzw. Luftlager verbessert überwacht werden.

Damit kann insbesondere vorgesehen sein, dass die Maschine mehrere Fluidlager aufweist, die insbesondere ringförmig mit jeweils gleichen Abständen zu benachbarten Fluidlagern angeordnet sind.

Beispielsweise kann vorgesehen sein, dass ein Drehtisch auf sechs Fluidlagern angeordnet ist, die jeweils in einem Versatz von 60° relativ zueinander angeordnet sind.

Des Weiteren kann vorgesehen sein, dass die Druckermittlungseinrichtung mindestens eine jeweils einem Fluidlager zugeordnete Sensoreinrichtung aufweist, wobei die Sensoreinrichtung eine einen Druck in dem jeweiligen Fluidlager repräsentierende Größe erfasst.

Bei der mindestens einen Sensoreinrichtung kann es sich jeweils um einen Drucksensor oder mindestens einen Dehnmessstreifen oder mindestens eine Kraftmessdose oder einen Abstandssensor zum Erfassen einer Fluidlagerspaltbreite zwischen dem ersten Element und dem zweiten Element handeln.

Wie bereits vorstehend ausgeführt wurde, kann somit situationsbedingt vorteilhaft sowohl eine direkte bzw. unmittelbare als auch eine indirekte bzw. mittelbare Ermittlung des Drucks in dem Fluidlager erfolgen. Selbstverständlich kann auch vorgesehen sein, dass verschiedene der vorgeschlagenen Sensorarten miteinander kombiniert werden, beispielsweise ein Drucksensor, der den Druck in dem Lager direkt erfasst, und eine der vorgeschlagenen indirekten Sensorarten, also ein Dehnmessstreifen, eine Kraftmessdose und/oder ein Abstandssensor. Auf diese Weise kann der Druck in dem Fluidlager redundant erfasst werden und die Genauigkeit so erhöht werden.

In einer weiteren Ausführungsform kann vorgesehen sein, dass die Druckermittlungseinrichtung eine Datenverarbeitungseinrichtung ist, die derart eingerichtet ist, dass sie anhand von Geometriedaten den zu erwartenden Druck oder die zu erwartende Druckänderung in dem Fluidlager ermittelt.

Auch bei der Maschine kann somit vorgesehen sein, dass anhand von vorbekannten Geometriedaten des ersten Elements und des zweiten Elements eine zu erwartende Druckschwankung in dem Fluidlager anhand eines dem Durchschnittsfachmann bekannten mathematischen Modells errechnet wird.

In allen Ausführungsformen können die vorgeschlagenen Abstandssensoren zum Erfassen einer Breite eines Fluidlagerspalts beliebige Abstandssensoren sein. Beispielsweise sind optisch messende Sensoren denkbar.

In allen Ausführungsformen der Maschine kann vorgesehen sein, dass das Fluidlager ein Luftlager ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine vereinfachte Darstellung einer Maschine gemäß einem Ausführungsbeispiel der vorliegenden Erfindung,
- Fig. 2: das Koordinatenmessgerät aus Fig. 2 in einer Ansicht parallel zur y-Achse,
- Fig. 3: eine schematische Ansicht einer möglichen Ausführungsform eines Luftlagers, wie es in der in den Figuren 1 und 2 dargestellten Maschine zur Anwendung kommen kann,
- Fig. 4: ein schematisches Ablaufdiagramm eines Ausführungsbeispiels eines Verfahrens.

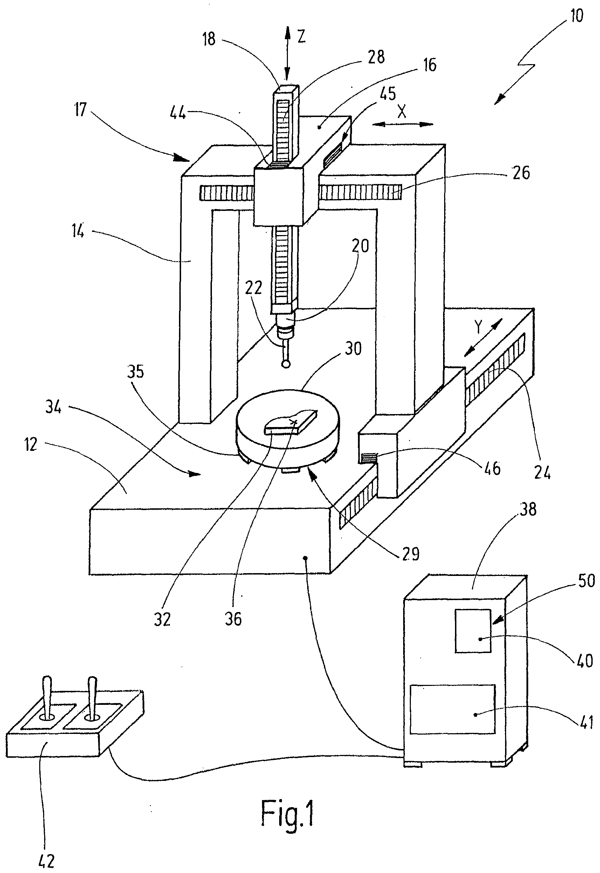

In Fig. 1 ist ein Ausführungsbeispiel der neuen Vorrichtung in Form einer Maschine 10 dargestellt, die als Koordinatenmessgerät ausgebildet ist. Die Erfindung ist jedoch nicht auf Koordinatenmessgeräte im engeren Sinne beschränkt, das heißt auf Messgeräte, bei denen mit Hilfe einer geeigneten Sensoreinrichtung Raumkoordinaten von Messpunkten an einem Werkstück bestimmt werden. Die Erfindung kann gleichermaßen bei anderen Arten von Messgeräten eingesetzt werden, bei denen das Werkstück auf einer Werkstückaufnahme angeordnet ist, und wobei die Werkstückaufnahme oder ein Maschinengestell der Maschine in mindestens einem separaten Fluidlager angeordnet ist.

Das Koordinatenmessgerät 10 besitzt eine Basis 12, auf der hier ein Portal 14 angeordnet ist. Das Portal 14 kann in einer ersten Längsrichtung bewegt werden, die üblicherweise als y-Achse bezeichnet wird. Am oberen Querträger des Portals 14 ist ein Schlitten 16 angeordnet, der entlang einer zweiten Längsachse bewegt werden kann. Diese zweite Längsachse wird üblicherweise als x-Achse bezeichnet. An dem Schlitten 16 ist eine Pinole 18 angeordnet, die entlang einer dritten Längsachse bewegt werden kann. Die dritte Längsachse wird üblicherweise als z-Achse bezeichnet. Typischerweise stehen die drei Längsachsen x, y und z senkrecht zueinander. Das Portal 14, der Schlitten 16 und die Pinole 18 bilden ein Maschinengestell 17 aus.

Am unteren freien Ende der Pinole 18 ist ein Tastkopf 20 mit einem Taststift 22 angeordnet. Der Tastkopf 20 kann mit Hilfe des Portals 14, des Schlittens 16 und der Pinole 18 innerhalb eines Messvolumens entlang der drei Achsen x, y, z bewegt werden. Der Tastkopf 20 und der Taststift 22 bilden zusammen eine erste Sensoreinrichtung im Sinne der vorliegenden Erfindung. Mit Hilfe der ersten Sensoreinrichtung kann ein Messpunkt an einem Werkstück identifiziert werden, indem der Messpunkt mit der freien Spitze des Taststiftes 22 angetastet wird. Mit den Bezugsziffern 24, 26, 28 sind drei Skalen bezeichnet, mit deren Hilfe man die Raumposition oder Raumkoordinaten eines angetasteten Messpunktes entlang der drei Achsen x, y, z bestimmen kann. Durch Antasten mehrerer Messpunkte und Bestimmen von entsprechenden Raumkoordinaten kann man Abmessungen (Länge einer Kante, Durchmesser einer Bohrung etc.) oder sogar die Raumform eines Werkstücks bestimmen.

Das in Fig. 1 dargestellte Koordinatenmessgerät mit einem taktilen Tastkopf ist ein bevorzugtes Ausführungsbeispiel. Die Erfindung ist darauf jedoch nicht beschränkt und kann gleichermaßen bei einem Messgerät in Ständerbauweise und/oder bei Messgeräten mit berührungslosen Sensoreinrichtungen angewendet werden, beispielsweise bei Messgeräten mit optischen Sensoren.

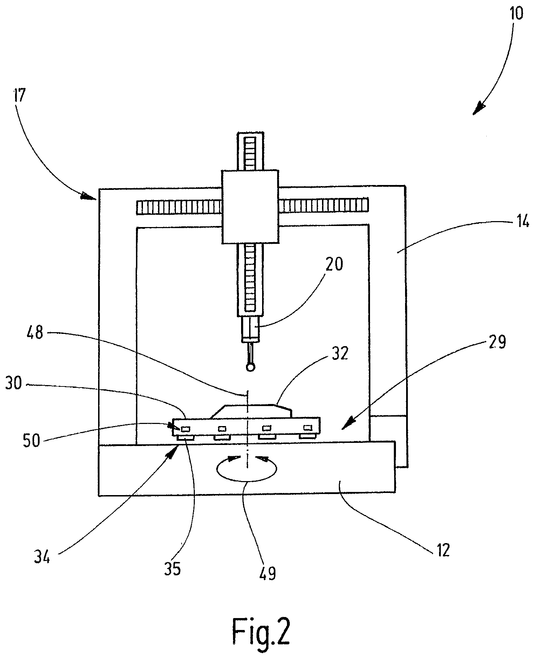

Des Weiteren weist die Maschine 10 eine Werkstückaufnahme 29 auf. Mit der Bezugsziffer 30 ist ein Drehtisch bezeichnet, auf dem hier ein Werkstück 32 angeordnet ist. Der Drehtisch 30 ist über ein Fluidlagersystem 34 auf der Basis 12 gelagert. Das Fluidlagersystem 34 weist mehrere Fluidlager 35 auf, die jeweils als Fluidpolster zwischen der Basis 12 und dem fluidgelagerten Drehtisch 30 ausgebildet sind. In einem besonders bevorzugten Ausführungsbeispiel ist der Drehtisch 30 ein runder Drehtisch (vgl. Fig. 2), der über sieben Fluidlager 35 auf der Basis 12 gelagert ist, wobei die sieben Fluidlager an der Unterseite des Drehtisches 30 gleichmäßig entlang des Außenumfangs verteilt sind. Insbesondere kann das Fluidlagersystem 34 ein Luftlagersystem sein. Insbesondere kann das Fluidlager 35 ein Luftlager sein. Das Fluid ist dann ein Gas. Das Gas ist Luft. Im Fall eines Hydrolagers bzw. eines Hydrolagersystems ist das Fluid eine Flüssigkeit, bspw. ein Öl.

Mit der Bezugsziffer 36 ist eine räumliche Position bezeichnet, die hier den Schwerpunkt des Drehtisches 30 mit dem darauf angeordneten Werkstück 32 repräsentiert. Wie man anhand Fig. 1 erkennen kann, kann dieser Schwerpunkt aufgrund des Werkstücks 32 abseits von dem Kreismittelpunkt oder Zentrum des Drehtisches 30 liegen, was insbesondere dann der Fall ist, wenn der Massenschwerpunkt des Werkstücks 32 radial außerhalb von dem Kreismittelpunkt des Drehtisches 30 liegt.

Mit der Bezugsziffer 38 ist eine Steuerungseinrichtung bezeichnet, die einerseits dazu dient, die Bewegungen des Koordinatenmessgeräts 10 einschließlich der Bewegung des Tastkopfes 20 und des Drehtisches 30 über hier nicht dargestellte Antriebe zu steuern. Andererseits dient die Auswerte- und Steuereinheit 38 dazu, die Raumkoordinaten eines mit dem Taststift 22 angetasteten Messpunktes an dem Werkstück 32 anhand der Messwerte von den Skalen 24, 26, 28 sowie daraus abgeleitete Messgrößen zu bestimmen, wie etwa die Länge einer Kante, die Tiefe oder der Durchmesser einer Bohrung etc.

Die Steuerungseinrichtung 38 weist eine Datenverarbeitungseinrichtung 40 auf, auf der ein Auswerte- und Steuerprogramm (hier nicht dargestellt) ausgeführt wird. In bevorzugten Ausführungsbeispielen besitzt die Steuerungseinrichtung 38 ferner eine Anzeigeeinrichtung 41, um einem Nutzer Messergebnisse anzuzeigen und/oder eine graphische Bedienoberfläche zum Verwalten der Maschine anzuzeigen. Hierzu ist des Weiteren eine Bedieneinrichtung 42 vorgesehen, über die ein Nutzer Nutzereingaben in die Maschine eingeben kann, um die Maschine wie gewünscht einzurichten und/oder zu steuern. Die Bedieneinrichtung 42 kann separat oder aber auch als Teil der Steuerungseinrichtung 38 vorgesehen sein. Selbstverständlich kann insbesondere auch eine kabellose Kommunikation der Bedieneinrichtung 42 und Steuerungseinrichtung 38 mit der Maschine 10 eingerichtet sein.

Neben dem Fluidlager 35 des Fluidlagersystems 34, das zur Lagerung der Werkstückaufnahme 29 Anwendung findet, können kumulativ oder alternativ selbstverständlich auch weitere Orte in der Maschine 10 vorgesehen sein, an denen ein Fluidlager 35 mit verbesserter Überwachung angeordnet ist. Beispielsweise kann ein derartiges Fluidlager auch in dem Maschinengestell 17 Anwendung finden, das den Arbeitskopf 20 trägt. So kann beispielsweise die Pinole 18 gegenüber dem Schlitten 16 mittels eines schematisch eingezeichneten Fluidlagers 44 abgestützt sein. Des Weiteren kann selbstverständlich auch der Schlitten 16 relativ zu dem Portal 18 mittels eines schematisch dargestellten Fluidlagers 45 abgestützt sein. Des Weiteren kann natürlich auch das Portal 18 an der Basis 12 mittels eines schematisch dargestellten Fluidlagers 46 abgestützt sein.

In der Seitenansicht gemäß Fig. 2 ist die Drehachse 48 des drehbaren Drehtisches 30 dargestellt. Der Drehtisch 30 kann in Richtung des Pfeils 49 um die Drehachse 48 herum gedreht werden, wobei der Drehtisch 30 mit Hilfe eines Fluidlagersystems 34 gleitet, das die Vielzahl von Fluidlagern 35 aufweist. Mit der Bezugsziffer 50 ist eine Druckermittlungseinrichtung bezeichnet, die beispielsweise als ein Drucksensor ausgebildet sein kann. Die Maschine 10 weist eine Vielzahl von Druckermittlungseinrichtungen 50 auf, um den individuellen Fluiddruck an jedem Fluidlager 35 zu bestimmen. Die mit Hilfe der Druckermittlungseinrichtungen 50 bestimmten Fluiddrücke repräsentieren die individuelle Lagerbelastung an dem jeweils zugeordneten Fluidlager 35.

Insbesondere kann in der dargestellten Ausführungsform vorgesehen sein, dass sechs oder sieben Fluidlager 35 vorgesehen sind, die das Fluidlagersystem 34 ausbilden. Die Fluidlager 35 sind insbesondere ringförmig zwischen dem Drehtisch 30 und der Basis 12 angeordnet. Dabei weisen die Fluidlager 35 gleiche Abstände zwischen sich auf. Insbesondere können sie bezüglich der Drehachse 48 jeweils in gleichen Winkelabständen angeordnet sein. Bei insgesamt sechs Fluidlagern 35 kann somit zwischen ihnen jeweils ein Winkel von 60° gebildet sein.

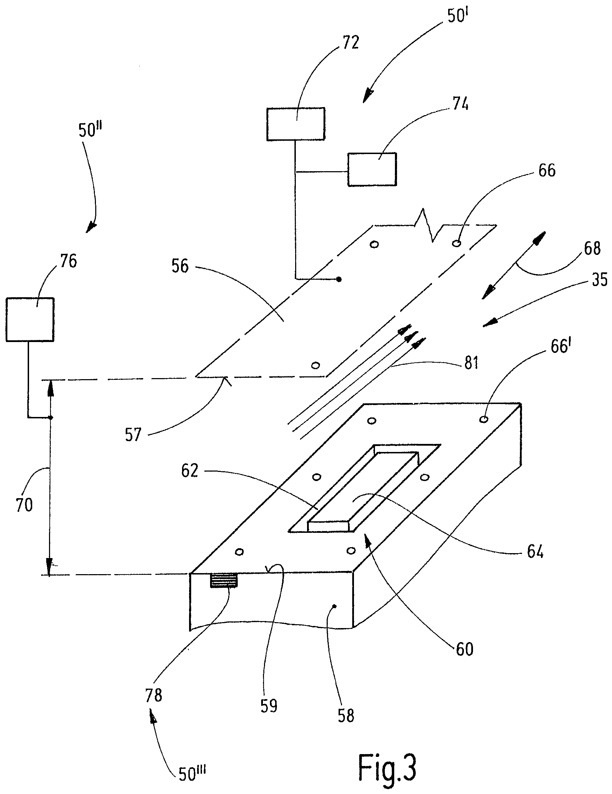

Fig. 3 zeigt eine Ausführungsform eines Fluidlagers 35, wie es in der Maschine in der Fig. 1 zum Einsatz kommen kann. Dabei können mittels des Fluidlagers 35 ein erstes Element 56 und ein zweites Element 58 aneinander abgestützt werden.

Hierzu kann in der dargestellten Ausführungsform in dem zweiten Element 58 eine Aussparung 62 gebildet sein, in der ein Magnet 64 angeordnet ist, der als Permanentmagnet ausgebildet ist. Bei dem Magneten 64 kann es sich beispielsweise um einen Permanentmagneten oder um einen Elektromagneten handeln. Die Aussparung 62 ist dabei in einer Lagerfläche 59 des zweiten Elements 58 gebildet. Auf diese Weise ist es möglich, ein sogenanntes vorgespanntes Fluidlager 35 einzurichten. Das Fluidlager 35 muss jedoch nicht zwingend vorgespannt ausgeführt sein. Selbstverständlich können die Aussparungen 62 und der Magnet 64 auch in dem ersten Element 56 angeordnet sein. Die Anordnung in dem zweiten Element 58 ist lediglich beispielhaft zu verstehen.

In dem Fluidlager 35 liegen sich eine erste Lagerfläche 57 des ersten Elements 56 und eine zweite Lagerfläche 59 des zweiten Elements 58 gegenüber und bilden zwischen sich einen Fluidlagerspalt 70 aus, der mit dem Bezugszeichen 70 bezeichnet ist. Wenn das Fluidlager 35 ein Luftlager ist, bildet die zwischen der ersten Lagerfläche 57 und der zweiten Lagerfläche 59 strömende Luft entsprechend ein Luftlagerspalt zwischen der ersten Lagerfläche 57 und der zweiten Lagerfläche 59 aus. Das erste Element 56 ist schematisch mit gestrichelten Linien dargestellt. Des Weiteren ist die Beabstandung der ersten Lagerfläche 57 und der zweiten Lagerfläche 59 in ihrer Dimension lediglich beispielhaft zu verstehen und zu Darstellungszwecken gewählt. Das erste Element 56 und das zweite Element 58 sind mittels eines zwischen der erste Lagerfläche 57 und der zweiten Lagerfläche 59 einbringbaren Fluids 81, beispielsweise Luft, aneinander abstützbar. Das Fluidlager 35 an sich ist somit durch die einander gegenüberliegenden erste Lagerfläche 57 und zweite Lagerfläche 59 bereitgestellt, zwischen die das Fluid 81 einbringbar ist. Das Fluid 81 wird unter einem gewissen Druck stehend zwischen der erste Lagerfläche 57 und die zweite Lagerfläche 59 eingefüllt bzw. eingedüst. Das Fluid 81 strömt dann durch den Fluidlagerspalt 70. Auf diese Weise wird das Fluidlager 35 zwischen dem ersten Element 56 und dem zweiten Element 58 bereitgestellt. Im Betrieb der Maschine 10 ist das Fluidlager 35 somit durch den von dem Fluid 81 durchströmten Fluidlagerspalt 70 zwischen der ersten Lagerfläche 57 bzw. dem ersten Element 56 und der zweite Lagerfläche 59 bzw. dem zweiten Element 58 bereitgestellt.

In der ersten Lagerfläche 57 und/oder der zweiten Lagerfläche 59 können Fluideinlassöffnungen 66, 66' vorgesehen sein, durch die das Fluid 81 in den Fluidlagerspalt 70 eingedüst bzw. eingebracht wird.

Auf diese Weise wird es möglich, dass das erste Element 56 und das zweite Element 58 relativ zueinander eine gleitende Bewegung ausführen, wie mit einem Doppelpfeil 68 angedeutet ist. Die Bewegung kann dabei verschleißfrei erfolgen, wobei die Elemente 56, 58 sicher aufeinander abgestützt und geführt sind.

Bei der Bewegungsausführung kann dabei vorgesehen sein, dass das zweite Element 58 feststeht, das heißt sich absolut nicht bewegt, und dass das erste Element 56 bewegt wird, das heißt sich sowohl absolut als auch relativ zu dem zweiten Element 58 bewegt. Selbstverständlich kann dies auch anders herum ausgeführt sein, das heißt, das zweite Element 58 bewegt sich, und das erste Element 56 steht fest. Selbstverständlich kann darüber hinaus auch vorgesehen sein, dass sowohl das erste Element 56 als auch das zweite Element 58 in einem absoluten Koordinatensystem eine Bewegung ausführen und sich darüber hinaus auch relativ zueinander bewegen.

Die verschiedenen Druckermittlungseinrichtungen sind in den Figuren 1, 2 und 3 mit den Bezugszeichen 50, 50' und 50" sowie 50'" gekennzeichnet. Grundsätzlich kann vorgesehen sein, dass der Druck in dem Fluidlager 35 mittels eines Drucksensors 78 direkt ermittelt wird. Der Drucksensor 78 kann dabei absolut oder relativ zu seinem Umgebungsdruck den Druck in dem Fluidlager 35 bestimmen. Dies kann direkt in dem Fluidlagerspalt 70 zwischen der ersten Lagerfläche 57 und der zweiten Lagerfläche 59 erfolgen, es kann aber beispielsweise auch in einer Zuführungsleitung erfolgen, die das unter Druck stehende Fluid 81 zu einer der Fluideinlassöffnungen 66, 66' leitet.

Des Weiteren kann vorgesehen sein, dass der in dem Fluidlager 35 vorherrschende Druck bzw. eine Druckänderung anhand von Verformungen des ersten Elements 56 und/oder des zweiten Elements 58 erfasst wird. Insbesondere kann dies unter Kenntnis eines ohne die erfasste Verformung vorherrschenden Solldrucks in dem Fluidlager 35 durchgeführt werden. Aus der Verformung kann dann auf eine Änderung des Solldrucks geschlossen werden. Hierzu können beispielsweise mindestens eine Kraftmessdose 72 und/oder mindestens ein Dehnmessstreifen 74 vorgesehen sein, die an dem ersten Element 56 angebracht sind. Sie können selbstverständlich auch mit dem zweiten Element 58 alternativ oder kumulativ verbunden sein. Es ist auch möglich, dass ein Abstandssensor 76 vorgesehen ist, der eine Fluidlagerspaltbreite 70 erfasst. Dieser Sensor kann beispielsweise als optischer Sensor ausgestaltet sein. Die Sensoren 72, 74, 76, 78 können dabei beispielsweise in dem ersten Element 56 und/oder in dem zweiten Element 58 angeordnet sein.

Letztlich ist es auch möglich, dass der in dem Fluidlager 35 erwartete Druck von einer Datenverarbeitungseinrichtung 40 berechnet wird. Dies kann anhand eines dem Durchschnittsfachmann bekannten mathematischen Modells basierend auf Geometriedaten des ersten Elements 56 und des zweiten Elements 58 geschehen. Der Druck in dem Fluidlager 35 kann somit tatsächlich und direkt, beispielsweise mittels des Drucksensors 78, tatsächlich und indirekt, beispielsweise mittels der mindestens einen Kraftmessdose 72, des mindestens einen Dehnmessstreifens 74 und/oder des Abstandssensors 76 erfolgen. Die Ermittlung des Drucks kann aber auch auf theoretischer Basis anhand von vorbekannten Geometriedaten des ersten Elements 56 und des zweiten Elements 58 anhand eines mathematischen Modells in der Datenverarbeitungseinrichtung 40 erfolgen.

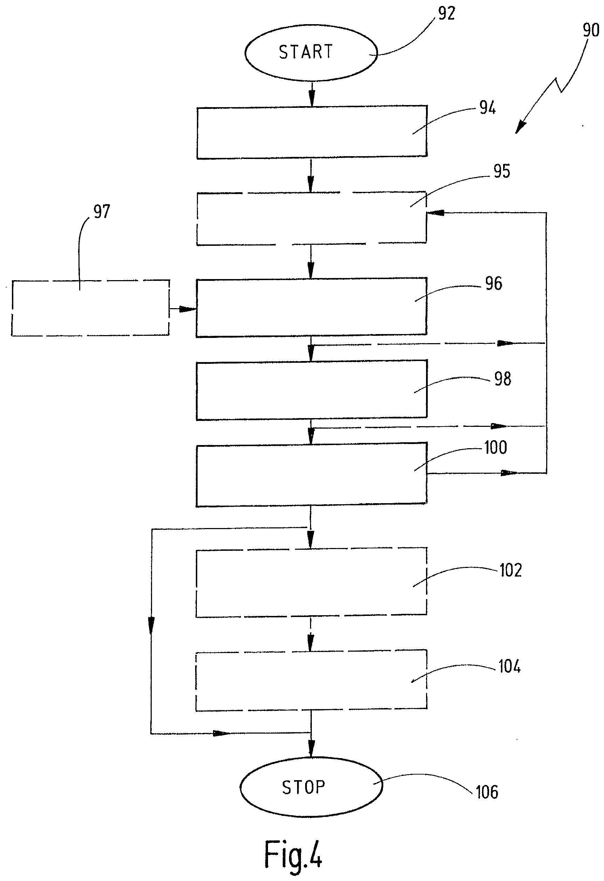

In Fig. 4 ist ein schematisches Ablaufdiagramm einer Ausführungsform eines Verfahrens 90 dargestellt.

Das Verfahren beginnt in einem Schritt 92. Zunächst wird in einem Schritt 94 ein Bereitstellen der Maschine 10 zum Bearbeiten oder Vermessen des Werkstücks 32 gezeigt, mit dem ersten Element 56 und dem zweiten Element 58, wobei das erste Element 56 die erste Lagerfläche 57 und das zweite Element 58 die zweite Lagerfläche 59 aufweist. Die erste Lagerfläche 57 bzw. das erste Element 56 und die zweite Lagerfläche 59 bzw. das zweite Element 58 sind dabei mittels des mindestens einen Fluidlagers 35 aneinander abgestützt. Des Weiteren ist die Steuerungseinrichtung 38 zum Steuern der Maschine 10 vorgesehen.

Es kann nun zunächst vorgesehen sein, in einem Schritt 95 die das erste Element 56 und das zweite Element 58 relativ zueinander zu bewegen. Bei einem ersten Durchführen zu Beginn des Verfahrens ist es jedoch nicht zwingend notwendig, diesen Schritt auszuführen.

Insbesondere ist vorgesehen, dass im Rahmen des Schritts 95, der mehrfach durchgeführt werden kann, der gesamte Bewegungsbereich des ersten Elements 56 und des zweiten Elements 58 sukzessive durchfahren wird. Alternativ kann auch vorgesehen sein, dass der gesamte Bewegungsbereich kontinuierlich durchfahren wird, wobei eine ständige Ermittlung des Drucks in dem Fluidlager 35 erfolgt.

In einem Schritt 96 erfolgt dann das Ermitteln einer einen Druck in dem mindestens einen Fluidlager 35 repräsentierenden Größe abhängig von einer Position und/oder Orientierung des ersten Elements 56 relativ zu dem zweiten Element 58.

Dieser Schritt des Ermittelns kann dabei tatsächlich anhand von Sensordaten ausgeführt werden, wobei die Sensordaten die den Druck repräsentierende Größe ermitteln. Dabei kann es sich sowohl direkt um den Druck selbst als auch um eine den Druck mittelbar repräsentierende Größe, wie beispielsweise die Breite des Fluidlagerspaltes 70, handeln.

Es kann auch vorgesehen sein, dass in einem Schritt 97 eine Erfassung von Geometriedaten des ersten Elements 56 und des zweiten Elements 58 erfolgt ist. In dem Schritt 96 kann dann der bei der entsprechenden relativen Position und/oder Orientierung des ersten Elements 56 zu dem zweiten Element 58 zu erwartende Druck theoretisch anhand eines mathematischen Modells basierend auf den Geometriedaten des ersten Elements 56 und des zweiten Elements 58 ermittelt werden. Diese Geometriedaten können im Rahmen des Schrittes 97 vorab bestimmt worden sein, beispielsweise im Rahmen einer Qualitätssicherung. In diesem Fall ist ein, insbesondere sukzessives, Durchfahren des Bewegungsbereichs in einem oder mehreren Schritten 95 nicht notwendig.

In einem Schritt 98 erfolgt nun das Bestimmen eines Korrekturwerts für einen Druck in dem mindestens einen Fluidlager 35 für die Position und/oder Orientierung des ersten Elements 56 relativ zu dem zweiten Element 58.

Dieser Korrekturwert wird dann mit der dazugehörigen Position und/oder Orientierung ersten Elements 56 relativ zu dem zweiten Element 58in der Steuerungseinrichtung in einem Schritt 100 hinterlegt.

Anschließend kann dann mit dem Schritt 95 des Bewegens fortgefahren werden, so lange, bis der gesamte Bewegungsbereich des ersten Elements 56 relativ zu dem zweiten Element 58durchfahren ist. Grundsätzlich kann auch vorgesehen sein, dass der Schritt des Hinterlegens 100 und/oder der Schritt des Bestimmens 98 nur einmal durchgeführt wird und bereits nach dem Schritt des Bestimmens 98 bzw. dem Schritt des Ermittelns 96 der Schritt des Bewegens 95 ausgeführt wird.

Anschließend kann das Verfahren dann in einem Schritt 106 enden.

Es kann aber auch vorgesehen sein, dass dann in einem Schritt 102 ein Anordnen des Werkstücks 32 auf einer Werkstückaufnahme 29 der Maschine 10 erfolgt und anschließend ein Bearbeiten oder Vermessen des Werkstücks 32 unter Berücksichtigung des Korrekturwerts bzw. des mindestens einen Korrekturwerts in einem Schritt 104 erfolgt. Für jede Position und/oder Orientierung ersten Elements 56 relativ zu dem zweiten Element 58, die im Rahmen eines Bewegens in dem Schritt 95 eingenommen wurde, wird ein Korrekturwert in der Steuerungseinrichtung im Rahmen eines Schritts 100 hinterlegt und kann dann während des Schritts 104 abgefragt werden, und die Überwachung des Lagers somit korrigiert werden.

Dann endet das Verfahren wiederum in einem Schritt 106.

Des Weiteren weist die vorliegende Offenbarung Ausführungsformen gemäß der folgen Sätze auf:
Satz 1: Verfahren (90) zum Ermitteln eines Korrekturwerts für eine Überwachung eines Fluidlagers (35) einer Maschine (10) zum Bearbeiten oder Vermessen eines Werkstücks (32), insbesondere eines Koordinatenmessgeräts, mit dem Schritt des Bereitstellens (94) der Maschine (10) zum Bearbeiten oder Vermessen eines Werkstücks (32), mit einem ersten Element (56) und einem zweiten Element (58), wobei das erste Element (56) und das zweite Element (58) mittels mindestens eines Fluidlagers (35) aneinander abgestützt sind, und mit einer Steuerungseinrichtung (38) zum Steuern der Maschine (10), und gekennzeichnet durch die Schritte des Ermittelns (96) einer einen Druck in dem mindestens einen Fluidlager (35) repräsentierenden Größe abhängig von einer Position und/oder Orientierung des ersten Elements (56) relativ zu dem zweiten Element (58), des Bestimmens (98) eines Korrekturwerts für einen Druck in dem mindestens einen Fluidlager (35) für die Position und/oder Orientierung des ersten Elements (56) relativ zu dem zweiten Elernent (58), und des Hinterlegens (100) des Korrekturwerts in der Steuerungseinrichtung (38).
Satz 2: Verfahren nach Satz 1, dadurch gekennzeichnet, dass der Schritt des Ermittelns (96) für eine Vielzahl von Positionen und/oder Orientierungen des ersten Elements (56) relativ zu dem zweiten Element (58) durchgeführt wird.
Satz 3: Verfahren nach Satz 2, dadurch gekennzeichnet, dass die Vielzahl von Positionen und/oder Orientierungen einen gesamten Bereich einer relativen Bewegung zwischen dem ersten Element (56) und dem zweiten Element (58) in diskreten Schritten abdeckt.
Satz 4: Verfahren nach einem der Sätze 1 bis 3, dadurch gekennzeichnet, dass das erste Element (56) und das zweite Element (58) jeweils ein Element einer Werkstückaufnahme (29) zur Aufnahme eines Werkstücks (32) ist.
Satz 5: Verfahren nach Satz 4, dadurch gekennzeichnet, dass das erste Element (56) ein Drehtisch (30) oder ein Rotor des Drehtisches (30) und das zweite Element (58) eine Basis (12), auf der der Drehtisch (30) abgestützt ist, oder ein Stator des Drehtischs (30) ist.
Satz 6: Verfahren nach einem der Sätze 1 bis 5, dadurch gekennzeichnet, dass die Maschine (10) mehrere Fluidlager (35) aufweist, wobei die Schritte des Ermittelns, des Bestimmens und des Hinterlegens für jedes der Fluidlager (35) durchgeführt werden.
Satz 7: Verfahren nach einem der Sätze 1 bis 6, dadurch gekennzeichnet, dass das erste Element (56) und das zweite Element (58) jeweils ein Element eines Maschinengestells (29) der Maschine (10) ist, wobei an dem Maschinengestell (29) ein Arbeitskopf (20) der Maschine (10) angeordnet ist.
Satz 8: Verfahren nach einem Sätze 1 bis 7, dadurch gekennzeichnet, dass vor jedem Schritt des Ermittelns (96) ein Schritt des Bewegens (95) des ersten Elements (56) und des zweiten Elements (58) relativ zueinander derart ausgeführt wird, dass sich eine Position und/oder eine Orientierung des ersten Elements (56) relativ zu dem zweiten Element (58) ändert.
Satz 9: Verfahren nach Satz 8, dadurch gekennzeichnet, dass das Bewegen (95) des ersten Elements (56) relativ zu dem zweiten Element (58) schrittweise erfolgt, wobei sich die Position und/oder die Orientierung des ersten Elements (56) und des zweiten Elements (58) während des Schritts des Ermittelns (96) relativ zueinander nicht ändert.
Satz 10: Verfahren nach Satz 8, dadurch gekennzeichnet, dass das Bewegen (95) des ersten Elements (56) relativ zu dem zweiten Element (58) kontinuierlich erfolgt, wobei sich die Position und/oder die Orientierung des ersten Elements (56) und des zweiten Elements (58) während des Schritts des Ermittelns (96) relativ zueinander ändert.
Satz 11: Verfahren nach einem der Sätze 4 bis 10, dadurch gekennzeichnet, dass die Schritte des Ermittelns (96), des Bestimmens (98) und des Hinterlegens (100) durchgeführt werden, ohne dass das Werkstück (32) auf der Werkstückaufnahme (29) angeordnet ist.
Satz 12: Verfahren nach einem der Sätze 1 bis 11, dadurch gekennzeichnet, dass das Verfahren (90) des Weiteren die Schritte des Anordnens (102) des Werkstücks (32) auf einer Werkstückaufnahme der Maschine (10), und des Bearbeitens oder Vermessens (104) des Werkstücks (32) unter Berücksichtigung des Korrekturwerts aufweist.
Satz 13: Verfahren nach einem der Sätze 1 bis 12, dadurch gekennzeichnet, dass der Schritt des Ermittelns (96) ausgeführt wird, indem der Druck direkt mittels eines Drucksensors (78) ermittelt wird.
Satz 14: Verfahren nach einem der Sätze 1 bis 12, dadurch gekennzeichnet, dass der Schritt des Ermittelns (96) ausgeführt wird, indem der Druck mittelbar über eine mittels mindestens eines Dehnmessstreifens (74) oder mindestens einer Kraftmessdose (72) erfasste Verformung des ersten und/oder des zweiten Elements (58) ermittelt wird, oder indem der Druck mittelbar über eine mittels eines Abstandssensors (76) erfasste Fluidlagerspaltbreite (70) zwischen dem ersten Element (56) und dem zweiten Element (58) ermittelt wird.
Satz 15: Verfahren nach einem der Sätze 1 bis 12, dadurch gekennzeichnet, dass der Schritt des Ermittelns (96) ausgeführt wird, indem aus vorbestimmten Geometriedaten des ersten Elements (56) und des zweiten Elements (58) eine erwartete Druckänderung in dem Fluidlager (35) abhängig von einer Position und/oder Orientierung des ersten Elements (56) relativ zu dem zweiten Element (58) berechnet wird.
Satz 16: Verfahren nach einem der Sätze 1 bis 15, dadurch gekennzeichnet, dass das Fluidlager (35) ein Luftlager ist.
Satz 17: Maschine (10) zum Bearbeiten und/oder Vermessen eines Werkstücks (32), insbesondere Koordinatenmessgerät, mit einem ersten Element (56) und einem zweiten Element (58), wobei das erste Element (56) und das zweite Element (58) mittels mindestens eines Fluidlagers (35) aneinander abgestützt sind, mit einer Druckermittlungseinrichtung (50) zum Ermitteln einer einen Druck in dem mindestens einen Fluidlager (35) repräsentierenden Größe, und mit einer Steuerungseinrichtung (38) zum Steuern der Maschine (10), dadurch gekennzeichnet, dass die Druckermittlungseinrichtung (50) dazu ausgebildet ist, eine den Druck in dem mindestens einen Fluidlager (35) repräsentierende Größe abhängig von einer Position und/oder Orientierung des ersten Elements (56) relativ zu dem zweiten Element (58) zu ermitteln und als Korrekturwert an die Steuerungseinrichtung (38) auszugeben.
Satz 18: Maschine nach Satz 17, dadurch gekennzeichnet, dass das erste Element (56) ein Drehtisch (30) und das zweite Element (58) eine Basis ist, auf der der Drehtisch (30) abgestützt ist.
Satz 19: Maschine nach Satz 17 oder 18, dadurch gekennzeichnet, dass die Maschine (10) mehrere Fluidlager (35) aufweist, die insbesondere ringförmig mit jeweils gleichen Abständen zu benachbarten Fluidlagern (35) angeordnet sind.
Satz 20: Maschine nach einem der Sätze 17 bis 19, dadurch gekennzeichnet, dass die Druckermittlungseinrichtung (50) mindestens eine jeweils einem Fluidlager (35) zugeordnete Sensoreinrichtung (72, 74, 76, 78) aufweist, wobei die Sensoreinrichtung (72, 74, 76, 78) eine einen Druck in dem jeweiligen Fluidlager (35) repräsentierende Größe erfasst.
Satz 21: Maschine nach einem der Sätze 17 bis 20, dadurch gekennzeichnet, dass die mindestens eine Sensoreinrichtung (72, 74, 76, 78) jeweils ein Drucksensor (78) oder mindestens ein Dehnmessstreifen (74) oder mindestens eine Kraftmessdose (72) oder ein Abstandssensor (76) zum Erfassen einer Fluidlagerspaltbreite (70) zwischen dem ersten Element (56) und dem zweiten Element (58) ist.
Satz 22: Maschine nach einem der Sätze 17 bis 21, dadurch gekennzeichnet, dass die Druckermittlungseinrichtung (50) eine Datenverarbeitungseinrichtung (40) ist, die derart eingerichtet ist, dass sie anhand von Geometriedaten die zu erwartende Druckänderung in dem Fluidlager (35) ermittelt.
Satz 23: Maschine nach einem der Sätze 17 bis 22, dadurch gekennzeichnet, dass das Fluidlager (35) ein Luftlager ist.

## Patentansprüche

1. Verfahren (90) zum Ermitteln eines Korrekturwerts für eine Überwachung eines Fluidlagers (35) einer Maschine (10) zum Bearbeiten oder Vermessen eines Werkstücks (32), insbesondere eines Koordinatenmessgeräts, mit dem folgenden Schritt:
- Bereitstellen (94) der Maschine (10) zum Bearbeiten oder Vermessen eines Werkstücks (32), mit einem ersten Element (56) und einem zweiten Element (58), wobei das erste Element (56) und das zweite Element (58) mittels mindestens eines Fluidlagers (35) aneinander abgestützt sind, und mit einer Steuerungseinrichtung (38) zum Steuern der Maschine (10), und
**gekennzeichnet durch** die folgenden Schritte:
- Ermitteln (96) einer einen Druck in dem mindestens einen Fluidlager (35) repräsentierenden Größe abhängig von einer Position und/oder Orientierung des ersten Elements (56) relativ zu dem zweiten Element (58),
- Bestimmen (98) eines Korrekturwerts für einen Druck in dem mindestens einen Fluidlager (35) für die Position und/oder Orientierung des ersten Elements (56) relativ zu dem zweiten Element (58), indem aus dem von der ermittelten Größe repräsentierten Druck der Korrekturwert orts- und/oder orientierungsabhängig bestimmt wird, und
- Hinterlegen (100) des Korrekturwerts in der Steuerungseinrichtung (38).

2. Verfahren nach Anspruch 1, **dadurch gekennzeichnet, dass** der Schritt des Ermittelns (96) für eine Vielzahl von Positionen und/oder Orientierungen des ersten Elements (56) relativ zu dem zweiten Element (58) durchgeführt wird.

3. Verfahren nach Anspruch 2, **dadurch gekennzeichnet, dass** die Vielzahl von Positionen und/oder Orientierungen einen gesamten Bereich einer relativen Bewegung zwischen dem ersten Element (56) und dem zweiten Element (58) in diskreten Schritten abdeckt.

4. Verfahren nach einem der Ansprüche 1 bis 3, **dadurch gekennzeichnet, dass** das erste Element (56) und das zweite Element (58) jeweils ein Element einer Werkstückaufnahme (29) zur Aufnahme eines Werkstücks (32) ist.

5. Verfahren nach einem der Ansprüche 1 bis 4, **dadurch gekennzeichnet, dass** die Maschine (10) mehrere Fluidlager (35) aufweist, wobei die Schritte des Ermittelns, des Bestimmens und des Hinterlegens für jedes der Fluidlager (35) durchgeführt werden.

6. Verfahren nach einem der Ansprüche 1 bis 5, **dadurch gekennzeichnet, dass** das erste Element (56) und das zweite Element (58) jeweils ein Element eines Maschinengestells (29) der Maschine (10) ist, wobei an dem Maschinengestell (29) ein Arbeitskopf (20) der Maschine (10) angeordnet ist.

7. Verfahren nach einem Ansprüche 1 bis 6, **dadurch gekennzeichnet, dass** vor jedem Schritt des Ermittelns (96) ein Schritt des Bewegens (95) des ersten Elements (56) und des zweiten Elements (58) relativ zueinander derart ausgeführt wird, dass sich eine Position und/oder eine Orientierung des ersten Elements (56) relativ zu dem zweiten Element (58) ändert.

8. Verfahren nach einem der Ansprüche 4 bis 7, **dadurch gekennzeichnet, dass** die Schritte des Ermittelns (96), des Bestimmens (98) und des Hinterlegens (100) durchgeführt werden, ohne dass das Werkstück (32) auf der Werkstückaufnahme (29) angeordnet ist.

9. Verfahren nach einem der Ansprüche 1 bis 8, **dadurch gekennzeichnet, dass** der Schritt des Ermittelns (96) ausgeführt wird, indem aus vorbestimmten Geometriedaten des ersten Elements (56) und des zweiten Elements (58) eine erwartete Druckänderung in dem Fluidlager (35) abhängig von einer Position und/oder Orientierung des ersten Elements (56) relativ zu dem zweiten Element (58) berechnet wird.

10. Verfahren nach einem der Ansprüche 1 bis 9, **dadurch gekennzeichnet, dass** das Fluidlager (35) ein Luftlager ist.

11. Maschine (10) zum Bearbeiten und/oder Vermessen eines Werkstücks (32), insbesondere Koordinatenmessgerät, mit einem ersten Element (56) und einem zweiten Element (58), wobei das erste Element (56) und das zweite Element (58) mittels mindestens eines Fluidlagers (35) aneinander abgestützt sind, mit einer Druckermittlungseinrichtung (50) zum Ermitteln einer einen Druck in dem mindestens einen Fluidlager (35) repräsentierenden Größe, und mit einer Steuerungseinrichtung (38) zum Steuern der Maschine (10), **dadurch gekennzeichnet, dass** die Druckermittlungseinrichtung (50) dazu ausgebildet ist, eine den Druck in dem mindestens einen Fluidlager (35) repräsentierende Größe abhängig von einer Position und/oder Orientierung des ersten Elements (56) relativ zu dem zweiten Element (58) zu ermitteln und einen aus dem von der ermittelten Größe repräsentierten Druck bestimmten Korrekturwert an die Steuerungseinrichtung (38) auszugeben.

12. Maschine nach Anspruch 11, **dadurch gekennzeichnet, dass** die Maschine (10) mehrere Fluidlager (35) aufweist, die insbesondere ringförmig mit jeweils gleichen Abständen zu benachbarten Fluidlagern (35) angeordnet sind.

13. Maschine nach Anspruch 11 oder 12, **dadurch gekennzeichnet, dass** die Druckermittlungseinrichtung (50) mindestens eine jeweils einem Fluidlager (35) zugeordnete Sensoreinrichtung (72, 74, 76, 78) aufweist, wobei die Sensoreinrichtung (72, 74, 76, 78) eine einen Druck in dem jeweiligen Fluidlager (35) repräsentierende Größe erfasst.

14. Maschine nach einem der Ansprüche 11 bis 13, **dadurch gekennzeichnet, dass** die Druckermittlungseinrichtung (50) eine Datenverarbeitungseinrichtung (40) ist, die derart eingerichtet ist, dass sie anhand von Geometriedaten die zu erwartende Druckänderung in dem Fluidlager (35) ermittelt.

15. Maschine nach einem der Ansprüche 11 bis 14, **dadurch gekennzeichnet, dass** das Fluidlager (35) ein Luftlager ist.

## Claims

1. Method (90) for ascertaining a correction value for monitoring a fluid bearing (35) of a machine (10) for machining or measuring a workpiece (32), in particular a coordinate measuring device, comprising the following step:
- providing (94) the machine (10) for machining or measuring a workpiece (32), having a first element (56) and a second element (58), the first element (56) and the second element (58) being supported against each another by means of at least one fluid bearing (35), and having a control device (38) for controlling the machine (10), and
**characterized by** the following steps:
- ascertaining (96) a quantity representing a pressure in the at least one fluid bearing (35) as a function of a position and/or orientation of the first element (56) relative to the second element (58),
- determining (98) a correction value for a pressure in the at least one fluid bearing (35) for the position and/or orientation of the first element (56) relative to the second element (58), by virtue of the correction value being determined as a function of position and/or orientation from the pressure represented by the ascertained quantity, and
- storing (100) the correction value in the control device (38).

2. Method according to Claim 1, **characterized in that** the ascertainment step (96) is carried out for a multiplicity of positions and/or orientations of the first element (56) relative to the second element (58).

3. Method according to Claim 2, **characterized in that** the multiplicity of positions and/or orientations covers an entire range of a relative movement between the first element (56) and the second element (58) in discrete steps.

4. Method according to one of Claims 1 to 3, **characterized in that** the first element (56) and the second element (58) are each an element of a workpiece holder (29) for holding a workpiece (32).

5. Method according to one of Claims 1 to 4, **characterized in that** the machine (10) has multiple fluid bearings (35), the ascertainment, determination and storage steps being carried out for each of the fluid bearings (35).

6. Method according to one of Claims 1 to 5, **characterized in that** the first element (56) and the second element (58) are each an element of a machine frame (29) of the machine (10), a working head (20) of the machine (10) being arranged on the machine frame (29).

7. Method according to one of Claims 1 to 6, **characterized in that**, before each ascertainment step (96), a step of moving (95) the first element (56) and the second element (58) relative to each other is carried out in such a way that a position and/or an orientation of the first element (56) relative to the second element (58) changes.

8. Method according to one of Claims 4 to 7, **characterized in that** the ascertainment (96), determination (98) and storage (100) steps are carried out without the workpiece (32) being arranged on the workpiece holder (29).

9. Method according to one of Claims 1 to 8, **characterized in that** the ascertainment step (96) is carried out **in that**, by using predetermined geometric data about the first element (56) and the second element (58), an expected pressure change in the fluid bearing (35) is calculated as a function of a position and/or orientation of the first element (56) relative to the second element (58).

10. Method according to one of Claims 1 to 9, **characterized in that** the fluid bearing (35) is an air bearing.

11. Machine (10) for machining and/or measuring a workpiece (32), in particular coordinate measuring device, having a first element (56) and a second element (58), the first element (56) and the second element (58) being supported against each other by means of at least one fluid bearing (35), having a pressure ascertaining device (50) for ascertaining a quantity representing a pressure in the at least one fluid bearing (35), and having a control device (38) for controlling the machine (10), **characterized in that** the pressure ascertaining device (50) is designed to ascertain a quantity representing the pressure in the at least one fluid bearing (35) as a function of a position and/or orientation of the first element (56) relative to the second element (58) and to output to the control device (38) a correction value determined from the pressure represented by the ascertained quantity.

12. Machine according to Claim 11, **characterized in that** the machine (10) has a plurality of fluid bearings (35), which in particular are arranged in the form of a ring with respectively equal distances from adjacent fluid bearings (35).

13. Machine according to Claim 11 or 12, **characterized in that** the pressure ascertaining device (50) has at least one sensor device (72, 74, 76, 78) respectively assigned to a fluid bearing (35), the sensor device (72, 74, 76, 78) detecting a quantity representing a pressure in the respective fluid bearing (35).

14. Machine according to one of Claims 11 to 13, **characterized in that** the pressure ascertaining device (50) is a data processing device (40), which is equipped in such a way that, by using geometric data, it ascertains the pressure change to be expected in the fluid bearing (35).

15. Machine according to one of Claims 11 to 14, **characterized in that** the fluid bearing (35) is an air bearing.

## Revendications

1. Procédé (90) de détermination d'une valeur de correction pour une surveillance d'un palier à fluide (35) d'une machine (10) servant à l'usinage ou au mesurage d'une pièce (32), notamment d'un appareil de mesure de coordonnées, comprenant les étapes suivantes :
- mise à disposition (94) de la machine (10) servant à l'usinage ou au mesurage d'une pièce (32), comprenant un premier élément (56) et un deuxième élément (58), le premier élément (56) et le deuxième élément (58) s'appuyant l'un contre l'autre au moyen d'au moins un palier à fluide (35), et comprenant un dispositif de commande (38) destiné à commander la machine (10), et
**caractérisé par** les étapes suivantes :
- détermination (96) d'une grandeur qui représente une pression dans l'au moins un palier à fluide (35) en fonction d'une position et/ou d'une orientation du premier élément (56) par rapport au deuxième élément (58),
- définition (98) d'une valeur de correction pour une pression dans l'au moins un palier à fluide (35) pour la position et/ou l'orientation du premier élément (56) par rapport au deuxième élément (58) en déterminant la valeur de correction à partir de la pression représentée par la grandeur déterminée en fonction du lieu et/ou de l'orientation, et
- mise en mémoire (100) de la valeur de correction dans le dispositif de commande (38).

2. Procédé selon la revendication 1, **caractérisé en ce que** l'étape de détermination (96) est exécutée pour une pluralité de positions et/ou d'orientations du premier élément (56) par rapport au deuxième élément (58).

3. Procédé selon la revendication 2, **caractérisé en ce que** la pluralité de positions et/ou d'orientations couvre, en étapes discrètes, une plage complète d'un mouvement relatif entre le premier élément (56) et le deuxième élément (58).

4. Procédé selon l'une des revendications 1 à 3, **caractérisé en ce que** le premier élément (56) et le deuxième élément (58) sont respectivement un élément d'un logement de pièce (29) destiné à accueillir une pièce (32).

5. Procédé selon l'une des revendications 1 à 4, **caractérisé en ce que** la machine (10) possède plusieurs paliers à fluide (35), les étapes de détermination, de définition et de mise en mémoire étant exécutées pour chacun des paliers à fluide (35).

6. Procédé selon l'une des revendications 1 à 5, **caractérisé en ce que** le premier élément (56) et le deuxième élément (58) sont respectivement un élément d'un bâti de machine (29) de la machine (10), une tête de travail (20) de la machine (10) étant montée sur le bâti de machine (29).

7. Procédé selon l'une des revendications 1 à 6, **caractérisé en ce qu'**une étape de déplacement (95) du premier élément (56) et du deuxième élément (58) l'un par rapport à l'autre est exécutée avant chaque étape de détermination (96), de telle sorte qu'une position et/ou une orientation du premier élément (56) par rapport au deuxième élément (58) changent.

8. Procédé selon l'une des revendications 4 à 7, **caractérisé en ce que** l'étape de détermination (96), de définition (98) et de mise en mémoire (100) sont exécutées sans que la pièce (32) soit montée sur le logement de pièce (29).

9. Procédé selon l'une des revendications 1 à 8, **caractérisé en ce que** l'étape de détermination (96) est exécutée en calculant, à partir de données géométriques prédéfinies du premier élément (56) et du deuxième élément (58), une variation de pression attendue dans le palier à fluide (35) en fonction d'une position et/ou d'une orientation du premier élément (56) par rapport au deuxième élément (58).

10. Procédé selon l'une des revendications 1 à 9, **caractérisé en ce que** le palier à fluide (35) est un palier d'air.

11. Machine (10) servant à l'usinage et/ou au mesurage d'une pièce (32), notamment appareil de mesure de coordonnées, comprenant un premier élément (56) et un deuxième élément (58), le premier élément (56) et le deuxième élément (58) s'appuyant l'un contre l'autre au moyen d'au moins un palier à fluide (35), comprenant un dispositif de détermination de pression (50) destiné à déterminer une grandeur qui représente une pression dans l'au moins un palier à fluide (35), et comprenant un dispositif de commande (38) destiné à commander la machine (10), **caractérisée en ce que** le dispositif de détermination de pression (50) est configuré pour déterminer une grandeur qui représente la pression dans l'au moins un palier à fluide (35) en fonction d'une position et/ou d'une orientation du premier élément (56) par rapport au deuxième élément (58) et pour délivrer au dispositif de commande (38) une valeur de correction déterminée à partir de la pression représentée par la grandeur déterminée.

12. Machine selon la revendication 11, **caractérisée en ce que** la machine (10) possède plusieurs paliers à fluide (35) qui sont notamment disposés en forme d'anneau avec des écarts respectivement identiques par rapport aux paliers à fluide (35) voisins.

13. Machine selon la revendication 11 ou 12, **caractérisée en ce que** le dispositif de détermination de pression (50) possède au moins un dispositif capteur (72, 74, 76, 78) associé respectivement à un palier à fluide (35), le dispositif capteur (72, 74, 76, 78) acquérant une grandeur représentant une pression dans le palier à fluide (35) correspondant.

14. Machine selon l'une des revendications 11 à 13, **caractérisée en ce que** le dispositif de détermination de pression (50) est un dispositif de traitement de données (40) qui est conçu de telle sorte qu'il détermine la variation de pression à attendre dans le palier à fluide (35) au moyen de données géométriques.

15. Machine selon l'une des revendications 11 à 14, **caractérisée en ce que** le palier à fluide (35) est un palier d'air.
